# EUROPÄISCHE PATENTSCHRIFT

(11) **EP 0 883 360 B1**
(45) Veröffentlichungstag und Bekanntmachung des Hinweises auf die Patenterteilung: **27.02.2002**
(21) Anmeldenummer: 97909335.8
(22) Anmeldetag: 30.09.1997
(51) Int. Cl.: A46D 3/05, F16J 15/32

(54) **HERSTELLUNGSVERFAHREN FÜR UND VORRICHTUNG ZUM HERSTELLEN VON BÜRSTENDICHTUNGEN**
METHOD AND DEVICE FOR THE MANUFACTURE OF BRUSH SEALS
PROCEDE DE PRODUCTION DE JOINTS A BROSSES ET DISPOSITIF DE PRODUCTION CORRESPONDANT

(30) Priorität: 08.10.1996 DE 19641374
(43) Veröffentlichungstag der Anmeldung: 16.12.1998
(73) Patentinhaber: MTU Aero Engines GmbH, 80995 München (DE)
(72) Erfinder: HOFFMÜLLER, Wilhelm, D-80999 München (DE); EICHNER, Josef, D-85298 Scheyern (DE); PRIESCHL, Franz, D-85293 Reichertshausen (DE)
(74) Vertreter: Einsele, Rolf W.
(86) Internationale Anmeldenummer: EP9705356
(87) Internationale Veröffentlichungsnummer: WO9815209

(56) Entgegenhaltungen:
- GB-A- 2 022 197
- US-A- 5 165 758
- US-A- 5 183 197

## Beschreibung

Die Erfindung betrifft ein Herstellungsverfahren für Bürstendichtungen. Des weiteren befaßt sich die Erfindung mit einer Vorrichtung zum Herstellen von Bürstendichtungen nach dem Oberbegriff des Anspruchs 7.

Die Fassung z. B. keramischer Borsten zu einer Bürstendichtung erfordert immer noch einen relativ hohen Aufwand, insbesondere hinsichtlich der Befestigung dieser Borsten an einem Träger.

Wie es beim Herstellen von Bürsten üblich und allgemein bekannt ist, wird hierzu eine Vorrichtung benötigt, die eine Halterung zur Ausbildung von einer Bürstenwange mit daran zur Bildung einer Bürstendichtung befestigen Borsten enthält.

Ein Verfahren zum Herstellen von Bürstendichtungen ist z.B. in GB 2 022 197 offenbart.

Ziel der vorliegenden Erfindung ist es, die Herstellung von Bürstendichtungen zu vereinfachen.

Das erfindungsgemäße Herstellungsverfahren für Bürstendichtungen enthält demnach folgende Schritte:
- Stapeln von Borsten in einen Borstenaufnahmeschacht derart, daß die Borsten teilweise neben dem Platz für zumindest eine Bürstenwange liegen,
- Verstellen des Borstenaufnahmeschachtes in Synchronisation mit dem Stapeln der Borsten relativ zu einer Einführstelle der Borsten in den Borstenaufnahmeschacht, so daß die Lage einer Borstenstapeloberfläche in dem Borstenaufnahmeschacht relativ zur Einführstelle zumindest im wesentlichen konstant bleibt,
- Befestigen der Borsten an zumindest einer Bürstenwange, die vor oder nach dem Stapeln der Borsten in den Borstenaufnahmeschacht in letzterem eingesetzt oder gebildet wurde, und
- Entnehmen der zumindest einen Bürstenwange mit den daran befestigten Borsten aus dem Borstenaufnahmeschacht.

Dadurch, daß der Borstenaufnahmeschacht in Synchronisation mit dem Zuführen von Borsten in den Borstenaufnahmeschacht an der Einführstelle vorbeigeführt wird, kann die gewünschte oder erforderliche vorgegebene Borstenmenge auf einfache und rationelle Weise zugeführt und gestapelt werden, so daß die einzelnen Borsten in dem Borstenaufnahmeschacht gleich selbsttätig ihre Endlage für die Bürste einnehmen. Ein manuelles Ausrichten der einzelnen Borsten ist nicht erforderlich. Das erfindungsgemäße Verfahren kann nicht nur sehr schnell und somit mit hoher Effektivität, sondern auch automatisiert ausgeführt werden, wodurch die Effizienz weiter gesteigert werden kann.

Ferner werden durch das Verfahren nach der Erfindung Fehlermöglichkeiten bei der Herstellung der Bürstendichtungen, insbesondere bei der Ausrichtung der Borsten, vermieden, was zu geringerem Ausschuß und somit einer höheren Produktivität und zu geringeren Kosten führt.

Die Erfindung ist nicht darauf beschränkt, daß bei dem Verfahren vor dem Stapeln der Borsten in den Borstenaufnahmeschacht in diesen zumindest eine Bürstenwange eingesetzt wird. Die zumindest eine Bürstenwange kann z.B. auch nach dem Stapeln der Borsten in den Borstenaufnahmeschacht eingesetzt oder darin gebildet werden.

Bevorzugt werden in den Borstenaufnahmeschacht zwei Bürstenwangen eingesetzt und die Borsten in dem Borstenaufnahmeschacht so gestapelt, daß die Borsten teilweise zwischen den beiden Bürstenwangen liegen. Damit sind die Borsten nach ihrer Befestigung an den beiden Bürstenwangen besonders gut gefaßt.

Eine einfach und mit hoher Effizienz und Haltbarkeit durchführbare zusätzliche oder alternative Möglichkeit zum Befestigen der Borsten an der zumindest einen Bürstenwange besteht erfindungsgemäß vorzugsweise darin, die Borsten in ihrem neben der zumindest einen Bürstenwange liegenden Bereich durch Verwendung beispielsweise eines Lasers, Plasmabrenners o.ä. zu verschmelzen. Dabei kann als Weiterbildung beim Verschmelzen der Borstenenden bezüglich der Borsten und/oder der zumindest einen Bürstenwange artgleiches Material zugegeben werden.

Das Befestigen der Borsten an der zumindest einen Bürstenwange kann durch eine weitere Ausgestaltung des erfindungsgemäßen Verfahrens begünstigt werden, indem die Borsten vor dem Einrühren in den Borstenaufnahmeschacht zum Stapeln darin in ihrem neben der zumindest einen Bürstenwange zu liegen kommenden Bereich einer Oberflächenbehandlung unterzogen werden. Insbesondere kann eine derartige Oberflächenbehandlung das Aufbringen eines auf die Materialien von Borsten und Bürstenwange abgestimmten Befestigungsmittels oder Hilfsmittels für die spätere Befestigung der Borsten an der zumindest einen Bürstenwange durch Bestreichen, Bespritzen, Galvanisieren, Sputtern, CVD oder PVD und/oder eine Behandlung zur Oberflächenvergrößerung der Borsten in diesem Bereich beinhalten.

Das Verfahren nach der Erfindung ermöglicht es, bezüglich der zumindest einen Bürstenwange einseitige oder zweiseitige Bürstendichtungen herzustellen. Dies kann durch die Lage der zumindest einen Bürstenwange relativ zu den Borsten eingerichtet werden, so daß die Borsten in einem ihrer Endbereiche oder in einem Zwischenbereich an der zumindest einen Bürstenwange befestigt werden können.

Zur Herstellung von Bürstendichtungen ist es ferner bevorzugt, zunächst Bürstendichtungssegmente herzustellen, die schließlich zu einer vollständigen Bürstendichtung kombiniert werden. Vorzugsweise geschieht dies, indem vor dem Einführen von Borsten in den Borstenaufnahmeschacht in letzteren ein erstes Segmentabschlußteil eingesetzt wird. Dann wird vor dem Befestigen der Borsten an der zumindest einen Bürstenwange ein zweites Segmentabschlußteil in den Borstenaufnahmeschacht eingesetzt. Vor dem Kombinieren einzelner Bürstendichtungssegmente zu einer vollständigen Bürstendichtung werden die ersten und zweiten Segmentabschlußteile schließlich entfernt.

Eine weitere Lösung der der Erfindung zu Grunde liegenden Aufgabe besteht in einer Herstellungsvorrichtung für Bürstendichtungen nach dem Anspruch 7.

Die Vorrichtung zum Herstellen von Bürstendichtungen enthält somit eine Halterung zur Ausbildung von einer Bürstenwange mit daran zur Bildung einer Bürstendichtung befestigten Borsten. Erfindungsgemäß ist dabei vorgesehen, daß die Halterung durch einen Borstenaufnahmeschacht gebildet ist, der in seinem Schachtverlauf zumindest eine Ausnehmung für eine Bürstenwange aufweist, so daß in dem Borstenaufnahmeschacht gestapelte Borsten teilweise neben der zumindest einen Bürstenwange liegen können, und relativ zu einer Einführstelle der Borsten in den Borstenaufnahme-schacht verstellbar ist, so daß die Lage einer Borstenstapeloberfläche in dem Borstenaufnahmeschacht bei dessen Verstellung relativ zur Einführstelle zumindest im wesentlichen konstant beibehalten werden kann.

Vorzugsweise enthält der Borstenaufnahmeschacht bei einer Weiterbildung der Erfindung eine die Einführstelle der Borsten bestimmende Abschluß-Schachtwand, die bei der Verstellung des Borstenaufnahmeschachtes zur Bestimmung eines Schachteingangs stationär gehalten ist. Dies führt zusätzlich zu einer erhöhten Sicherheit und einem verringerten Aufwand bei der erfindungsgemäßen Vorrichtung.

Alternativ oder zusätzlich kann zur Erleichterung des Betriebs der Vorrichtung zum Herstellen von Bürstendichtungen nach der Erfindung vorgesehen sein, daß der Borstenaufnahmeschacht eine entfernbare Abschluß-Schachtwand enthält, so daß ein Verbindungsbereich der Borsten mit der Bürstenwange in dem Borstenaufnahmeschacht freigebbar ist. Dadurch kann das Befestigen der Borsten an der zumindest einen Bürstenwange besonders einfach, schnell und sicher durchgeführt werden.

Im Rahmen einer anderen Weiterbildung der Erfindung wird eine die Einführstelle der Borsten in den Borstenaufnahmeschacht bestimmende Umlenkrolle gegenüber dem Borstenaufnahmeschacht zur Bestimmung eines Schachteingangs stationär gehalten. Weiter ist hierbei ein synchron mit der Verstellung des Borstenaufnahmeschachtes über die Umlenkrolle zuführbares Band vorgesehen, das im Bereich eines Schachtbodens des Borstenaufnahmeschachtes an letzterem anbringbar ist, wobei das Band im Bereich des Borstenaufnahmeschachtes zumindest Bestandteil einer Abschluß-Schachtwand ist. Diese Abschluß-Schachtwand kann somit z.B. durch ein Stahlband gebildet sein, das von einer Zuführrolle her kommend über die Umlenkrolle an den Schachtboden des Borstenaufnahmeschachtes angeschlossen ist. Synchron mit der Verstellung des Borstenaufnahmeschachtes wird das Band von der Zuführrolle abgespult und deckt nach Umlenkung über die Umlenkrolle den Borstenaufnahrneschacht ab. Dadurch tritt bei der Verstellung des Borstenaufnahmeschachtes keine Relativbewegung zwischen den darin gestapelten Borsten und der Abschluß-Schachtwand auf und die Lage der Borsten bleibt stabil erhalten. Das Band kann z.B. durch eine mit der Zuführrolle zusammenwirkende Torsionsfeder gegenüber der Verstellbewegung des Borstenaufnahmeschachtes stramm gehalten werden.

Die Erfindung ist zwar nicht auf die Herstellung von ringförmigen Bürstendichtungen beschränkt, jedoch sehen die Erfinder darin den überwiegenden Anwendungsfall. Dafür ist es vorteilhaft und dementsprechend bevorzugt, daß der Borstenaufnahmeschacht eine Ringnut oder einen Ringnutabschnitt, die bzw. der um das Ringzentrum verstellbar ist, und eine die Ringnut oder den Ringnutabschnitt abdeckende Abschluß-Schachtwand enthält, die insbesondere entfernbar und bei der Verstellung des Borstenaufnahmeschachtes gegenüber einer Einführstelle der Borsten in den Borstenaufnahmeschacht stationär ist. In Weiterbildung dieser Ausgestaltung kann ferner vorzugsweise vorgesehen sein, daß die Tiefe der Ringnut oder des Ringnutabschnittes in Radialrichtung verläuft. Die mit dieser Anordnung herstellbaren Bürstendichtungen weisen in Radialrichtung oder unter einem Winkel dazu in der Radialebene liegende Borsten auf. Im Umfang der Erfindung ist es jedoch auch möglich, daß Bürstendichtungen hergestellt werden, deren Borsten hinsichtlich der Ringform der Dichtung in Axialrichtung liegen.

Durch eine weitere Ausgestaltung der Erfindung lassen sich besonders stabile und haltbare Bürstendichtungen herstellen. Hierfür ist vorgesehen, daß der Borstenaufnahmeschacht im Querschnitt eine T-Form aufweist, daß jeder der beiden Querausläufer der T-Form eine Ausnehmung für eine Bürstenwange bildet, und daß die Borsten in dem Borstenaufnahmeschacht mit einem ihrer Endbereiche zwischen den beiden eingesetzten Bürstenwangen stapelbar sind, wobei der obere Abschnitt der T-Form durch eine Abschluß-Schachtwand gebildet ist, die insbesondere entfernbar und bei der Verstellung des Borstenaufnahmeschachtes gegenüber einer Einführstelle der Borsten in den Borstenaufnahmeschacht stationär ist.

Wenn die zumindest eine Ausnehmung für eine Bürstenwange in dem Borstenaufnahmeschacht von solcher Form und Größe ist, daß bei einer darin eingesetzten Bürstenwange und in dem Borstenaufnahmeschacht gestapelten Borsten in einem Verbindungsbereich der letzteren mit der Bürstenwange ein Aufnahmeraum für Befestigunsmittel zum Befestigen der Borsten an der Bürstenwange gebildet ist, kann eine größere Menge an Befestigungsmittel eingesetzt werden, um eine besonders feste und dauerhafte Verbindung der Borsten mit der oder den Bürstenwange(n) zu erreichen.

Die Automatisierung und damit Betriebsgeschwindigkeit und -sicherheit der erfindungsgemäßen Vorrichtung zum Herstellen von Bürstendichtungen kann durch Borstenzuführeinrichtungen zum Einführen von Borsten in den Borstenaufnahmeschacht weiter erhöht werden. Eine weitere Fortbildung dieser Ausgestaltung sieht vor, daß die Borstenzuführeinrichtungen zum Einführen von verschiedenen Borstenarten in den Borstenaufnahmeschacht insbesondere für vorgebbare Anordnungen der verschiedenen Borstenarten in dem Borstenaufnahmeschacht ausgelegt sind, und daß die Borstenzuführeinrichtungen vorzugsweise eine einstellbare Steuerung für die Anordnung der verschiedenen Borstenarten in dem Borstenaufnahmeschacht enthalten. Damit lassen sich in Abhängigkeit vom Einsatzbereich der herzustellenden Bürstendichtungen optimale Materialien und Formen der Borsten auf einfache und rationelle Art in einer Dichtung kombinieren.

Durch die Verwendung jedenfalls eines ersten Segmentabschlußteils läßt sich als weiterer Vorteil ein Boden des Borstenaufnahmeschachtes durch eine Lageoberfläche des ersten Segmentabschlußteils bilden, die die Lage und Ausrichtung der gestapelten Borsten relativ zu der zumindest einen Bürstenwange bestimmt. Damit kann auf einfache Weise eine Neigung der Borsten gegenüber der zumindest einen Bürstenwange eingestellt werden, die einem späteren Einsatz der Bürstendichtung an einer Drehwelle Rechnung trägt.

Eine weitestgehende Automatisierung der erfindungsgemäßen Vorrichtung zum Herstellen von Bürstendichtungen läßt sich in vorteilhafter Weise dadurch erreichen, daß eine Steuerung vorgesehen ist, die zum Synchronisieren der Verstellung des Borstenaufnahmeschachtes mit dessen Füllgrad mit Borsten ausgelegt ist. Vorzugsweise beeinflußt diese Steuerung auch ggf. vorgesehene Borstenzuführeinrichtungen oder erfaßt anhand letzterer den Füllgrad des Borstenaufnahmeschachtes. Die Automatisierung kann dadurch optimiert werden, wenn die Steuerung die Borstenzuführeinrichtungen und die Verstellung des Borstenaufnahmeschachtes synchronisiert.

Weitere vorteilhafte und bevorzugte Ausgestaltungen der Erfindung ergeben sich aus den abhängigen Ansprüchen und deren Kombinationen.

Die Erfindung wird nachfolgend zur Verdeutlichung anhand von Ausführungsbeispielen unter Bezugnahme auf die Zeichnung genau beschrieben, in der:
- Fig. 1: eine schematische teilweise geschnittene Seitenansicht auf eine erste Ausführung der Vorrichtung zum Herstellen von Bürstendichtungen zeigt,
- Fig. 2: eine schematische Schnittansicht längs der Linie II-II in der Fig. 1 ist,
- Fig. 3: einen schematischen Querschnitt durch eine erste Bauart einer Bürstendichtung und einen Teil der Ausführung der Vorrichtung zum Herstellen von Bürstendichtungen von Fig. 1 darstellt,
- Fig. 4: ein schematischer Querschnitt durch eine zweite Bauart einer Bürstendichtung und einen Teil der Ausführung der Vorrichtung zum Herstellen von Bürstendichtungen von Fig. 1 in einer zur Fig. 2 analogen Darstellung ist,
- Fig. 5: eine schematische Querschnittsdarstellung einer dritten Bauart einer Bürstendichtung zeigt,
- Fig. 6: eine schematische Querschnittsdarstellung einer vierten Bauart einer Bürstendichtung zeigt,
- Fig. 7: eine schematische Darstellung von einer Oberflächenbehandlung unterzogenem Borstenmaterial ist,
- Fig. 8: eine schematische Querschnittsdarstellung einer fünften Bauart einer Bürstendichtung mit Borsten zeigt, die unter Verwendung des Borstenmaterials von Fig. 7 hergestellt wurden, und
- Fig. 9: eine schematische teilweise geschnittene Seitenansicht auf eine zweite Ausführung der Vorrichtung zum Herstellen von Bürstendichtungen zeigt.

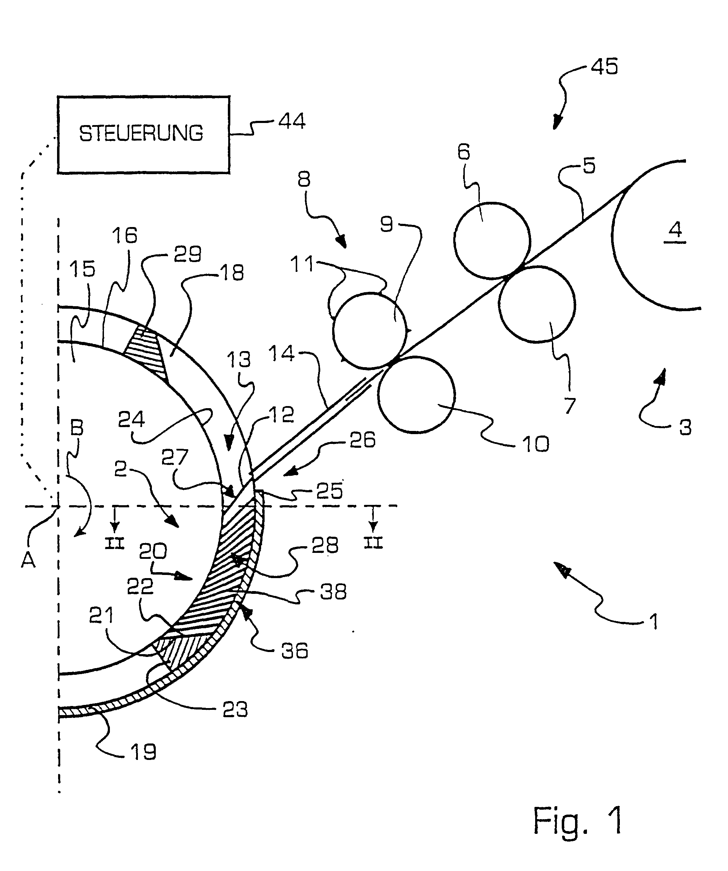

Eine in Fig. 1 gezeigte Vorrichtung 1 zum Herstellen von Bürstendichtungen 2 enthält einen Materialspender 3 in Form einer Trommel 4, wie beispielsweise einer Fasertrommel, mit darauf aufgewickeltem Borstenmaterial 5, das z.B. Faser oder Fadenmaterial sein kann. Letzteres wird durch Führungsrollen 6, 7 von der Trommel abgezogen und einer Schneidevorrichtung 8 zugeführt, die eine Schneiderolle 9 und eine Gegenrolle 10 enthält. Die Schneiderolle 9 trägt an ihrem Umfang Schneidezähne 11, deren Abstand auf dem Schneiderollen- oder -radumfang der Länge der damit von dem Borstenmaterial 5 abschneidbaren Borsten 12 entspricht. Die Gegenrolle 10 kann den Schneidezähnen 11 der Schneiderolle 9 positionsmäßig zugeordnete Vertiefungen (nicht gezeigt) oder andere Einrichtungen oder Gestaltungen haben, die ein sicheres und sauberes Abschneiden der Borsten 12 von dem Borstenmaterial 5 gewährleisten.

Bei dem gezeigten Ausführungsbeispiel sind sowohl die Führungsrollen 6, 7 als auch die Schneiderolle 9 und die Gegenrolle 10 angetrieben, so daß sie das Borstenmaterial 5 bzw. die davon abgeschnittenen Borsten 12 in Richtung auf einen Borstenaufnahmeschacht 13 hin fördern. Zur Überbrückung der Wegstrecke von der Schneidevorrichtung 8 zum Borstenaufnahmeschacht 13 hin ist eine Borstenführung 14 vorgesehen, die rohr- oder schalenartig ist und die Borsten 12 sicher von der Schneidevorrichtung 8 zum Borstenaufnahmeschacht 13 leiten. Um verschiedene Borsten 12 zum Borstenaufnahmeschacht 13 dirigieren zu können, der verschiedene Stellungen und Anordnungen annehmen bzw. aufweisen kann, kann die Borstenführung 14 entsprechende Einstellmöglichkeiten bieten und/oder mehrfach vorhanden sein, um von einer Mehrzahl von Materialspendern 3 Borstenmaterial 5 gleichzeitig oder abwechselnd zum Borstenaufnahmeschacht 13 zuzuführen.

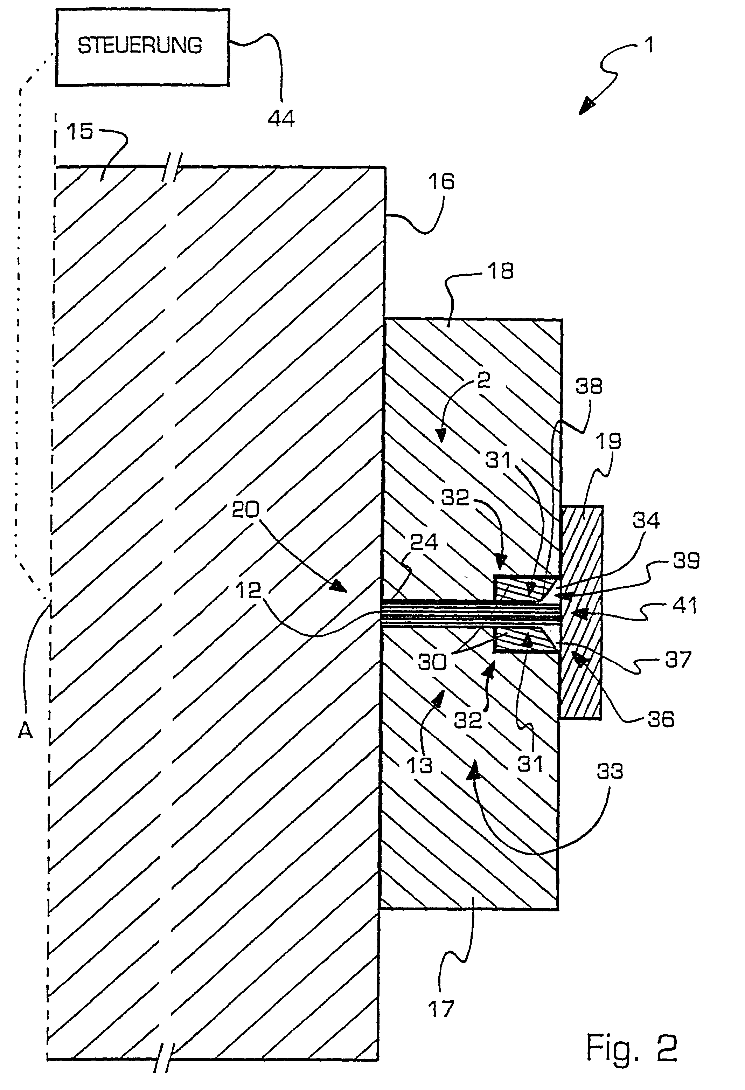

Der Borstenaufnahmeschacht 13, der auch in der Fig. 2 im Querschnitt dargestellt ist, enthält eine Trägerscheibe 15, zwei auf deren Umfangsfläche 16 beabstandet angebrachte Seitenringe 17, 18 als Schachtseitenwände und eine Abschluß-Schachtwand 19, die zwar relativ zu den Seitenringen 17, 18 positioniert, jedoch nicht mit diesen verbunden ist. Die Abschluß-Schachtwand 19 hat in Richtung des Schachtverlaufs eine Länge, die auf die Länge eines Bürstendichtungssegmentes 20 abgestimmt ist, das unter Verwendung des Borstenaufnahmeschachtes 13 herstellbar und zum Aufbau einer kompletten Bürstendichtung 2 verwendbar ist. Die Trägerscheibe 15 und die zwei auf deren Umfangsfläche 16 beabstandet angebrachte Seitenringe 17, 18 bilden eine Ringnut oder einen Ringnutabschnitt, die bzw. der zur Ausbildung des Borstenaufnahmeschachtes 13 von der Abschluß-Schachtwand 19 durch Verstellung des Borstenaufnahmeschachtes 13 abgedeckt werden kann.

Die Länge der Abschluß-Schachtwand 19 in Richtung des Schachtverlaufs kann für eine Mehrzahl von unterschiedlich langen Bürstendichtungssegmenten 20 geeignet sein, da der Schachtboden 21 des Borstenaufnahmeschachtes 13 durch eine Lage-oberfläche 22 eines ersten Segmentabschlusses 23 gebildet ist, dessen Lage und Ausdehnung in Richtung des Schachtverlaufs die für die Bürstendichtungssegmentbildung zur Verfügung stehende Länge innerhalb des Borstenaufnahmeschachtes 13 im Rahmen der Länge der Abschluß-Schachtwand 19 bestimmt.

Es ist zu beachten, daß die Trägerscheibe 15 lediglich die innere Schachtwand 24 bilden muß und in ihren sonstigen Abmessungen frei ist. Statt der Trägerscheibe 15 kann auch eine Teilscheibe, ein Ring oder ein Teilring eingesetzt werden, solange dadurch eine ausreichende Umfangsfläche gemäß der geplanten Länge der Bürstendichtungssegmente 20 bereitgestellt wird. Entsprechend können die Seitenringe 17, 18 auch durch Teilringe gebildet werden.

Die Trägerscheibe 15 ist zusammen mit den daran befestigten Seitenringen 17, 18 um ihren Mittelpunkt A drehbar. Da die Abschluß-Seitenwand 19 nicht mit den Seitenringen 17, 18 verbunden ist, bleibt sie bei einer Drehung oder allgemein Verstellung der Trägerscheibe 15 stationär und bildet an ihrem zur Drehrichtung (Verstellrichtung) B der Trägerscheibe 15 im Sinne einer Verlängerung der wirksamen Länge des Borstenaufnahmeschachtes 13 zur Aufnahme von Borsten 12 entgegengesetzt liegenden Ende 25 eine ortsfeste Begrenzung einer Einführstelle 26 für Borsten 12 in den Borstenaufnahmeschacht 13. Bei einer Drehung der Trägerscheibe 15 zur Verlängerung der wirksamen Länge des Borstenaufnahmeschachtes 13 zur Aufnahme von Borsten 12 wird der erste Segmentabschluß 23 längs der Abschluß-Schachtwand 19 von der Einführstelle 26 für Borsten 12 weg bewegt.

Die Ausführungen der Vorrichtung 1 sind nicht auf solche beschränkt, die eine Drehverstellung der Trägerscheibe 15 enthalten. Die Form des Verstellweges kann wie auch die Form des Schachtverlaufs an die Form der Bürstendichtungen 2 angepaßt sein, die mit der Vorrichtung 1 hergestellt werden sollen.

Die Borsten 12 werden somit von der Schneidevorrichtung 8 über die Borstenführung 14 zur Einführstelle 26 geführt, von wo aus sie in den Borstenaufnahmeschacht 13 gestapelt werden. Mit zunehmender Füllung des Borstenaufnahmeschachtes 13 wird dieser durch Drehung der Trägerscheibe 15 so verstellt, daß die Oberfläche 27 des in dem Borstenaufnahmeschacht 13 gebildeten Borstenstapels 28 ihre Lage relativ zur Einführstelle 26 zumindest im wesentlichen konstant beibehält. Wenn eine vorgesehene Segmentgröße erreicht ist, d.h., wenn eine ausreichende Menge von Borsten 12 in den Borstenaufnahmeschacht 13 gestapelt oder geschichtet wurde, wird von der Einführstelle 26 her ein zweiter Segmentabschluß 29 in den Borstenaufnahmeschacht 13 eingesetzt, um z.B. den Borstenstapel 28 zu fixieren.

Bevor nun das Bürstendichtungssegment 20 fertiggestellt werden kann, ist eine Bürstenwange 30 erforderlich, an der die Borsten 12 befestigt werden können. Bei dem in der Zeichnung gezeigten und hier beschriebenen Ausführungsbeispiel werden verfahrensmäßig zwei Bürstenwangen 30 in den Borstenaufnahmeschacht 13 eingesetzt. Der Borstenaufnahmeschacht 13 hat hierzu, wie am besten in der Querschnittsdarstellung der Fig. 2 zu erkennen ist, einen T-förmigen Querschnitt. Jede der beiden Bürstenwangen 30 wird in einen je eine Ausnehmung 31 bildenden Querausläufer 32 der T-Form 33 eingesetzt, so daß er sich längs des Schachtverlaufes erstreckt. Die Abschluß-Seitenwand 19 bildet den oberen Abschluß dieser T-Form 33. Die Seiten des Querausläufers 32 der T-Form 33 und die Seiten des Stils der T-form 33 sowie die Unterseiten der Querausläufer 32 werden durch die Seitenringe 17, 18 und der Fuß der T-Form 33 wird durch die Trägerscheibe 16 gebildet. Die Seitenringe 17, 18 sind relativ gegeneinander spannbar, um die dazwischen angeordneten Borsten 12 sicher halten zu können.

Im Rahmen der Erfindung kommt es verfahrens- und vorrichtungsmäßig jedoch nicht darauf an, ob die Bürstenwangen 30 vor dem Stapeln der Borsten 12 in dem Borstenaufnahmeschacht 13 oder danach eingesetzt werden, oder ob die Bürstenwangen 30 durch Einspritzen eines geeigneten Materials vor oder nach dem Stapeln der Borsten 12 in dem Borstenaufnahmeschacht 13 in einem entsprechenden Formhohlraum des Borstenaufnahmeschachtes 13, der dann den Ausnehmungen 31 entspräche, direkt gebildet werden. Grundsätzlich ist die Erfindung auch nicht auf die Verwendung von zwei Bürstenwangen 30 beschränkt. Beispielsweise könnte der Querschnitt des Borstenaufnahmeschachtes 13 auch eine L-Form (nicht gezeigt) haben, in deren Quersteg nur eine Bürstenwange 30 zum Einsatz kommt. Aber auch jede andere auf den späteren Einsatzort der Bürstendichtungen 2 abgestimmte Querschnittsform des Borstenaufnahmeschachtes 13 ist möglich.

Bei dem vorliegenden Ausführungsbeispiel können die beiden Bürstenwangen 30 z.B. von der Einführstelle 26 her bei an den Seitenringen 17, 18 anliegender Abschluß-Seitenwand 19 in die Ausnehmungen 31 des Borstenaufnahmeschachtes 13 eingesetzt werden. Es kann aber auch vor dem Einsetzen der Bürstenwangen 30 in die Ausnehmungen 31 die Abschluß-Seitenwand 19 entfernt werden, so daß die Ausnehmungen 31 frei zugänglich und die Bürstenwangen 30 so darin einsetzbar sind.

Wenn sich die Bürstenwangen 30 in den Ausnehmungen 31 des Borstenaufnahmeschachtes 13 und ein Borstenstapel 28 in beabsichtigtem Umfang in dem Borstenaufnahmeschacht 13 befinden, wobei die Länge der Bürstenwangen 30 in der Schachtverlaufsrichtung der Höhe des Borstenstapels 28 entspricht, und ggf. der zweite Segmentabschluß 29 angebracht wurde, können die Borsten 12 an den Bürstenwangen 30 befestigt oder damit verbunden werden. In dem Fall, daß die Bürstenwangen 30 direkt in den Ausnehmungen 31 des Borstenaufnahmeschachtes 13 gebildet werden, nachdem der Borstenstapel 28 fertiggestellt wurde, kann die Verbindung von Borsten 12 mit den Bürstenwangen 30 beispielsweise dadurch erfolgen, daß die Borsten 12 teilweise in die Bürstenwangen 30 eingegossen werden.

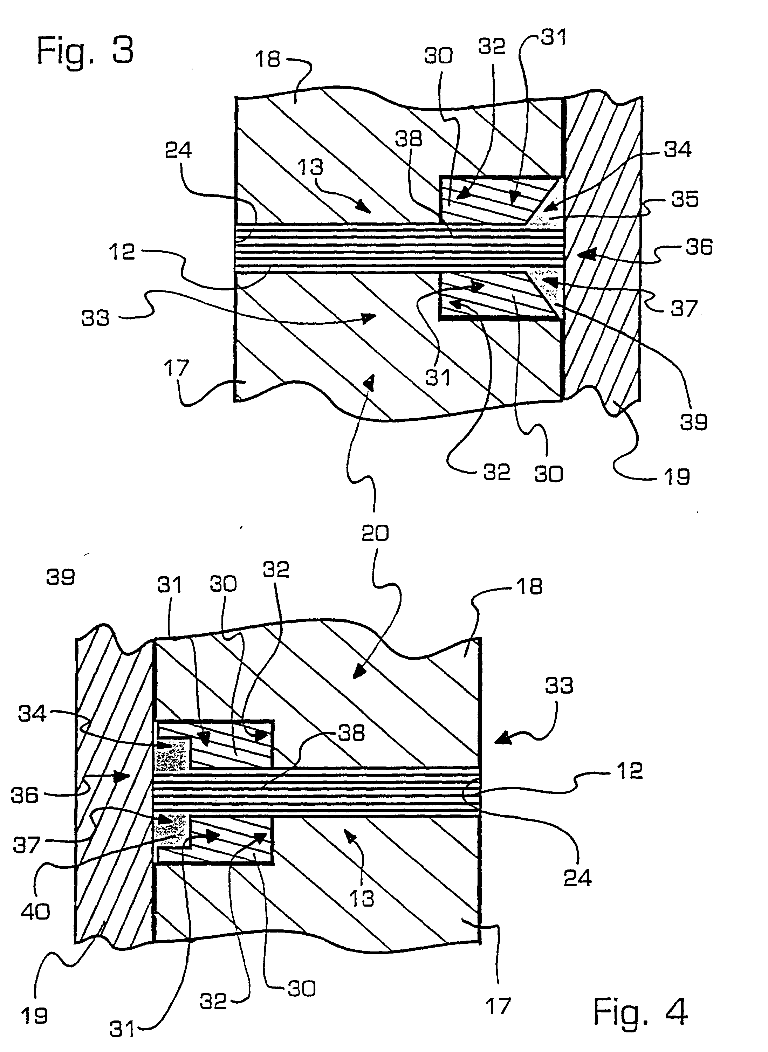

Werden jedoch vorgefertigte Bürstenwangen 30 verwendet und beispielsweise vor dem Einschichten der Borsten 12 in den Borstenaufnahmeschacht 13 eingesetzt, so müssen sie nach Fertigstellung des gewünschten Borstenstapels 28 mit den einzelnen Borsten 12 verbunden werden. Hierfür gibt es verschiedene Möglichkeiten, von denen einige unter Bezugnahme auf die in den Fig. 3, 4, 5, 6 und 8 dargestellten Ausführungsbeispiele nachfolgend exemplarisch angegeben werden.

Um die Borsten 12 mit den Bürstenwangen 30 zu verbinden, kann ein Befestigungsmittel 34 verwendet werden. Dieses Befestigungsmittel kann z.B. ein Kleber 35 sein, der in einem Verbindungsbereich 36 der Borsten 12 mit den Bürstenwangen 30 aufgetragen wird und nach dem Aushärten eine feste Verbindung zwischen den Borsten 12 und den Bürstenwangen 30 sicherstellt. Der Kleber 35 ist auf die bei den Borsten 12 und den Bürstenwangen 30 verwendeten Materialien z.B. Keramik bzw. Metall abgestimmt, so daß ein Spezialkleber für Keramik/Metall-Verbindungen zum Einsatz kommt. Um eine möglichst große Klebefläche zu erhalten, ist bei der in der Fig. 3 gezeigten Ausführung der Bürstenwangen 30 vorgesehen, daß letztere einen Verbindungs- oder Aufnahmeraum 37 ausbilden, der einen rechtwinkligen Querschnitt hat und ein Teil der Ausnehmungen 31 ist. Statt eines durchgehenden Verbindungsraums 37 können auch mehrere separate Verbindungsräume vorgesehen sein.

Dieser gesamte Verbindungsraum 37 kann mit dem Kleber 35 gefüllt werden, so daß entsprechend der Darstellung in der Fig. 3 die in diesen Verbindungsraum 37 hineinreichenden Endbereiche 38 der Borsten 12 ganz von dem Kleber 35 umgeben sind, der andererseits an der Innenseite des Verbindungsraums 37 angreift. Die so erzeugbare Verbindung ist äußerst fest und haltbar. Dies wird ferner dadurch verstärkt, daß der Kleber 35 nach seinem Aushärten einen Steg 39 bildet, der von den freien unverklebten Enden der Borsten 12 her betrachtet die Bürstenwangen 30 hintergreift und somit mit letzteren eine formschlüssige Verbindung gegen eine Kraft auf die Borsten 12 in Richtung von den Bürstenwangen 30 zu den freien unverklebten Enden der Borsten 12 hin bildet.

Der Verbindungsraum 37 bestimmt bei dieser Ausführung auch den Verbindungsbereich 36, der durch Entfernen der Abschluß-Schachtwand 19 frei zugänglich ist. Nach dem Entfernen der Abschluß-Schachtwand 19 kann daher der Kleber 35 problemlos auf den Verbindungsbereich 36 äufgetragen oder ggf. in den Verbindungsraum 37 eingefüllt werden. Eventuell wird oder ist der Verbindungsraum 37 oder allgemein der Verbindungsbereich 36 vor, während und/oder nach dem Einfüllen des Klebers 35 abgedeckt.

Es ist zu beachten, daß die Borsten 12 beim vorstehend erläuterten Ausführungsbeispiel in einem Endbereich 38 mit den Bürstenwangen 30 verbunden sind. Die Erfindung ist jedoch unabhängig von der Befestigungsart der Borsten 12 an den Bürstenwangen 30 nicht auf diese Ausgestaltung beschränkt. Beispielsweise können die Borsten 12 mit einem Mittelbereich (nicht bezeichnet) neben den Bürstenwangen 30 liegen und in Radialrichtung (bezüglich der Seitenringe 17, 18) über die Bürstenwangen 30 vorstehen. Damit kann eine Bürstendichtung (nicht dargestellt) mit einer Innen - und einer Außenbürste geschaffen werden. Bei der letzteren Ausgestaltung ist es z.B. möglich simultan zum Einschlichten der Borsten 12 in den Borstenaufnahmeschacht 13 im Verbindungsbereich der Borsten 12 mit den Bürstenwangen 30 Kleber zu deren Verbindung aufzutragen.

Ferner müssen die Borsten 12 in der herzustellenden Bürstendichtung 2 allgemein nicht zwangsweise radial verlaufen. Durch die Form und Stellung der Lageoberfläche 22 des ersten Segmentabschlusses 23 kann beispielsweise auch eine zwar in einer Radialebene der Seitenringe 17, 18 liegende, aber unter einem Winkel zu deren Radien verlaufende Borstenausrichtung erreicht werden, wie exemplarisch in der Fig. 1 dargestellt ist. Die Borsten 12 können aber auch in einer hinsichtlich der Seitenringe 17, 18 definierten Axialrichtung oder unter einem Winkel dazu verlaufen. Schließlich ist es auch nicht erforderlich, daß die herzustellende Bürstendichtung ringförmig ist, sondern sie kann jegliche lineare oder gekrümmte Form haben.

Unter Bezugnahme auf die Fig. 4 wird nunmehr eine weitere Ausführungsform der mit der erfindungsgemäßen Vorrichtung und dem erfindungsgemäßen Verfahren herstellbaren Bürstendichtung 2 beschrieben. Die Anordnung der Borsten 12 und der Bürstenwangen 30 ist analog zu derjenigen, die in der Fig. 3 dargestellt ist. Jedoch hat der Verbindungsraum 37 einen dreieckigen oder V-förmigen Querschnitt, der sich zur von den freien Enden der Borsten 12 abgewandten Seite der Bürstenwangen 30 hin erweitert. Bei dem vorliegenden Ausführungsbeispiel wird anstelle eines Klebers 35 ein Lot 40 als Befestigungsmittel 34 verwendet. Das Lot 40 kann in Abhängigkeit von den Materialien der Borsten 12 und der Bürstenwangen 30 z.B. ein Paladiumlot sein und in pastöser, aber auch gestückelter oder Pulver- oder Folienform in den Verbindungsraum 37 eingebracht oder allgemein auf den Verbindungsbereich 36 aufgebracht werden.

Das Lot 40 kann durch Bestreichen des Verbindungsbereichs 36 darauf aufgebracht oder in den zugehörigen Verbindungsraum 37 eingebracht werden. Dazu ist es aber erforderlich, daß die Abschluß-Schachtwand 19 entfernt wird, damit der Bürstenrücken 41 frei zugänglich ist. Mit demselben Effekt kann das Lot 40 aber beispielsweise auch als eine Art Lotpaste mit einer Sprühpistole, wie einer Druckluft-Sprühpistole, vergleichbarer solchen zum Farbauftrag, auf den Verbindungsbereichs 36 aufgebracht oder in den zugehörigen Verbindungsraum 37 eingebracht werden. Dem Fachmann sind hierzu weitere Möglichkeiten und Einrichtungen zu deren Realisierung geläufig, so daß eine Beschreibung hiervon im einzelnen nicht erforderlich ist.

Damit das Lot 40 seine Haltewirkung ausüben kann, muß es geschmolzen werden, was mit einem Punkt- oder Linienheizstrahler, einer Hochfrequenzanlage, einem Laser o.dgl. (nicht gezeigt) kurzzeitig geschehen kann. Vorzugsweise geschieht das Schmelzen des Lots 40 in einer Schutzgasatmosphäre. Nachdem das Lot 40 über seinen Schmelzpunkt hinaus erwärmt und somit verflüssigt wurde, füllt es den Verbindungsraum 37 aus und dringt ggf. auch zwischen die Borsten 12 in deren entsprechenden Endbereich 38 ein. Erkaltet das Lot 40 nun wieder, so verbindet es die Borsten 12 fest und dauerhaft untereinander und mit den Bürstenwangen 30 und bildet in derselben Weise wie der Kleber 35 beim Beispiel der Fig. 3 einen Steg 39, der die Bürstenwangen 30 im Bereich der Endbereiche 38 der Borsten 12 hintergreift.

Als weitere Möglichkeit kann, insbesondere, wenn mindestens ein Verbindungsraum 37 vorgesehen ist, das Lot 40 aber auch prozeßbegleitend während des Einstapelns der Borsten 12 in den Borstenaufnahmeschacht 13 eingefüllt werden, ähnlich, wie es oben bereits im Zusammenhang mit der Verwendung von Kleber 35 insbesondere bei zweiseitigen Bürstendichtungen 2 mit Innen- und Außenbürsten erläutert wurde. Über Düsen (nicht dargestellt) oder allgemein Ausgabeeinrichtungen, die z.B. im Bereich der Einführstelle 26 für Borsten 12 in den Borstenaufnahmeschacht 13 an der Abschluß-Schachtwand 19 angebracht sein können, kann gleichzeitig mit dem Zuführen und Einschlichten der Borsten 12 in den Borstenaufnahmeschacht 13 Lot in den Verbindungsraum oder ggf. die Verbindungsräume 37 eingefüllt werden. Besteht der Borstenaufnahmeschacht 13 aus einem Material, das mit dem Lotmaterial keine Verbindung eingeht, so kann zum Schmelzen des Lots 40 der Borstenaufnahme-schacht 13 insgesamt oder an geeigneten Stellen aufgeheizt werden und bildet gleichsam eine Form für das Lot 40, so daß es bei seinem Erkalten automatisch eine vorbestimmbare Form und Oberfläche erhält.

Eventuell ist es aber bei allen entsprechenden Ausführungsformen, bei denen mit Lot 40 gearbeitet wird, auch möglich, letzteres bereits in geschmolzenem Zustand in den Verbindungsraum 37 einzufüllen. Alternativ zu den vorbeschriebenen Anwendungsformen des Lots 40 kann es auch beispielsweise durch ein Flammspritzverfahren oder als Plasma, das Metall- und/oder Keramikbestandteile enthält, durch ein Plasmaspritzverfahren o.ä. auf den Verbindungsbereich 36 aufgebracht oder in den Verbindungsraum 37 eingebracht werden. Auch dieses Verfahren kann grundsätzlich sowohl bei frei zugänglichem Bürstenrücken 41, d.h. bei abgenommener Abschluß-Schachtwand 19, durchgeführt werden, als auch verfahrensbegleitend bereits während des Einlagerns der Borsten 12 in den Borstenaufnahmeschacht 13 erfolgen. Entsprechende Düsen (nicht dargestellt) können an der Einführstelle 26 z.B. an der Abschluß-Schachtwand 19 eingerichtet werden.

Allgemein können Kleber 35 oder Lot 40 jeweils artbezogen durch Bestreichen, Bespritzen, Besprühen, Galvanisieren, Sputtern, CVD, PVD oder Auffüllen des Verbindungsbereiches 36 auf diesen aufgebracht oder in den zugehörigen Verbindungsraum 37 eingebracht werden. Dabei ist in Abhängigkeit von der Verfahrensweise ein Entfernen der Abschluß-Schachtwand 19 vor der Behandlung des Verbindungsbereichs 36 mit Kleber 35 oder Lot 40 erforderlich oder optional, damit der Bürstenrücken 41 ggf. frei zugänglich ist.

Das Verbinden der Borsten 12 mit den Bürstenwangen 30 mittels einer galvanischen Schicht am Bürstenrücken 41 eignet sich besonders dann, wenn die damit ausgestattete Bürstendichtung 2 für einen Einsatz in einem niedrigen Temperaturbereich vorgesehen ist.

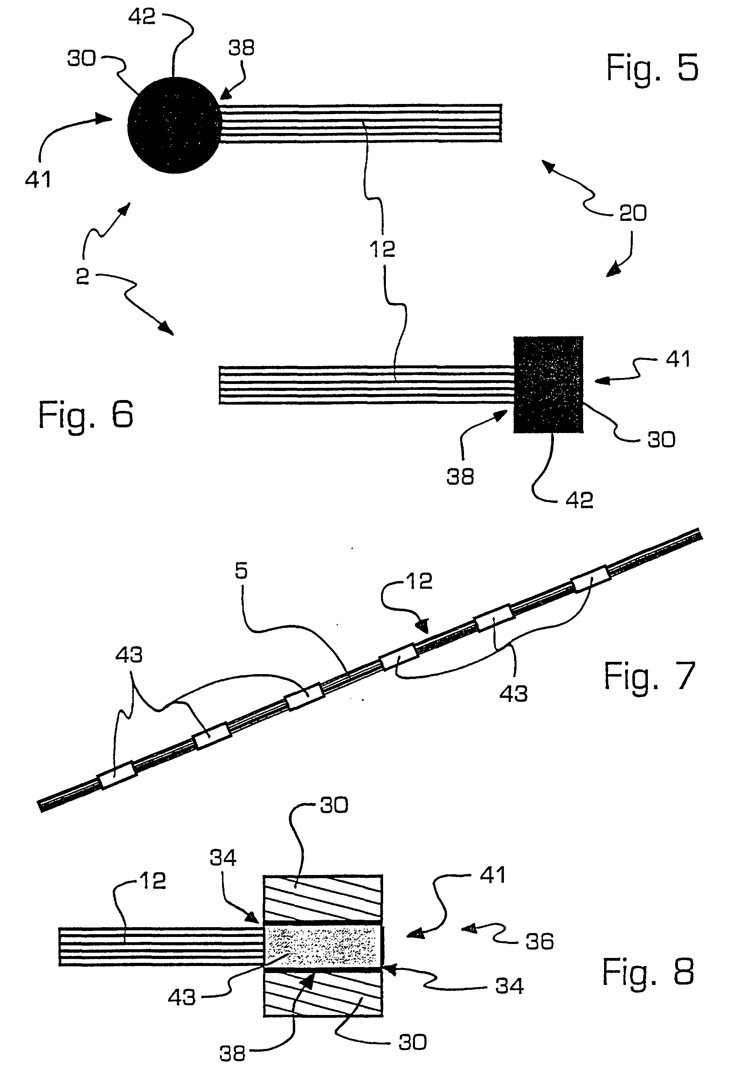

Der Verbindungsraum 37 kann, wenn er überhaupt vorgesehen wird, auch einen anderen als rechtwinkligen oder dreieckigen Querschnitt haben. Beispielsweise kann der Verbindungsraum auch einen solchen Querschnitt haben, der sich mit den Bürstenwangen 30 zu einen Kreis ergänzt. Eine mit entsprechenden Bürstenwangen 30 und einem passenden Verbindungsraum 37 hergestellte Bürstendichtung 2 oder ein Segment davon ist in der Fig. 5 im Querschnitt dargestellt. Die Verbindung der Borsten 12 mit den Bürstenwangen 30 wurde bei diesem Ausführungsbeispiel durch Erwärmen oder Aufheizen mittels eines Lasers, Plasmabrenners o.dgl. unter Zugabe von artgleichem Material hergestellt. Bei den Borsten 12 dieser Ausführung handelt es sich z.B. um Quarzfasern. Es könnten ferner ohne Einschränkung auf das vorliegende Ausführungsbeispiel allgemein aber auch Aluminiumoxidfasern usw. verwendet werden. Durch Zugabe des artgleichen Materials kann die Größe und Form der Schmelzraupe 42 variiert werden. Durch das Verschmelzen von Borsten 12 und Bürstenwangen 30 werden diese integral verbunden.

Beispielsweise kann der Verbindungsraum 37 ferner z.B. im Zusammenhang mit einem kreisrunden Querschnitt der Bürstenwangen 30 nach der Verbindung mit den Borsten 12 auch durch eine entsprechende Formgebung der Abschluß-Schachtwand 19 ausgebildet sein. Dazu ist dann an dem schachtinnenseitigen Abschnitt der Abschluß-Schachtwand 19 eine entsprechende Nut oder Ausnehmung (nicht dargestellt) vorgesehen. Diese Ausgestaltung der Vorrichtung 1 zum Herstellen von Bürstendichtungen 2 ist nicht auf die Herstellung kreisrunder Bürstenwangen 30 begrenzt, sondern kann grundsätzlich bei jeder Geometrie der Bürstenwangen eingesetzt oder mit anderen Ausgestaltungen kombiniert werden.

Eine andere Form der Schmelzraupe 42 ist in der Fig. 6 dargestellt, bei der die Bürstenwangen 30 nach der Verbindung mit den Borsten 12 einen rechtwinkligen Querschnitt haben.

Das verwendete Borstenmaterial 5 kann optional auch beispielsweise vor dem Schneiden mit der Schneidevorrichtung 8 abschnittweise beschichtet werden, um an den Borsten 12 Beschichtungsabschnitte 43 auszubilden, die beim Verbinden mit den Bürstenwangen 30 dazu beitragen, daß die Borsten 12 untereinander und an den Bürstenwangen 30 einfacher und/oder besser befestigt werden können. Als Beschichtungen in den Beschichtungsabschnitten 43 können Lot oder allgemein Metall verwendet werden, das durch Bestreichen, Besprühen, Sputtern, Galvanisieren, CVD, PVD u.ä. auf die Borsten 12 bereichsweise aufgebracht werden kann.

Nach dem Schneiden dieses Borstenmaterials 5 in Borsten 12 durch die Schneidevorrichtung 8 und dem Einsortieren oder Stapeln der Borsten 12 in den Borstenaufnahmeschacht 13 kommen die Beschichtungsabschnitte 43 neben oder zwischen die Bürstenwangen 30 und lassen sich z.B. im Fall einer Lotbeschichtung durch eine Wärmebehandlung damit verbinden.

In der Fig. 7 ist ein entsprechender Teil von Borstenmaterial 5 exemplarisch dargestellt, auf dem Beschichtungsabschnitte 43 in den später zwischen den Bürstenwangen 30 liegenden Endbereichen 38 der Borsten 12 aufgebracht sind. Eine von diesem Borstenmaterial 5 abgeschnittene Borste 12 ist in der Fig. 8 zwischen zwei Bürstenwangen 30 befestigt gezeigt. Wenn beispielsweise in den Beschichtungsabschnitten 43 Lot 40 auf das Borstenmaterial 5 aufgebracht ist, wird beim Schmelzen dieses Lots 40 sowie von Lot 40, das sich auf dem Verbindungsbereich 36 befindet, in optimaler Weise sichergestellt, daß über eine ausreichende Länge der Borsten 12 neben den Bürstenwangen 30 genügend Lot 40 für eine feste und dauerhafte Verbindung sowohl der Borsten 12 untereinander, als auch mit den Bürstenwangen 30 vorhanden ist.

Statt Lot 40 können in den Beschichtungsabschnitten 43 auch jegliche andere für die Befestigung der Borsten 12 untereinander und an den Bürstenwangen 30 geeignete oder solche Befestigungen fördernde oder erleichternde Materialien in den Endbereichen 38 der Borsten 12 aufgebracht werden. Ferner kann auch jede andere Oberflächenbehandlung außer einer Beschichtung zusätzlich oder alternativ vorgenommen werden. Lediglich beispielsweise wird hier das Aufrauhen eines Oberflächenbereichs der Borsten 12 angegeben, der später beschichtet wird und/oder zwischen den Bürstenwangen 30, ggf. insbesondere in einem Verbindungsraum 37, liegt.

Die Anlage oder Vorrichtung 1 zum Herstellen von Bürstendichtungen 2 enthält auch eine Steuerung 44 (Fig. 1), die für die Verstellung der Trägerscheibe 16 oder allgemein des Borstenaufnahmeschachtes 13 in Abhängigkeit vom Füllzustand des letzteren mit Borsten 12 Sorge trägt. Um den Füllzustand des Borstenaufnahmeschachtes 13 mit Borsten 12 feststellen zu können, ist die Steuerung 44 mit Detektionseinrichtungen (nicht dargestellt) verbunden, die jegliche gebräuchliche Ausgestaltung haben können. Als Detektionseinrichtungen eigenen sich z.B. Lichtschranken, die an der Einführstelle 26 der Borsten 12 in den Borstenaufnahmeschacht 13 beispielsweise an der Abschluß-Schachtwand 19 angebracht sein können.

Die Steuerung 44 kann aber auch mit den Borstenzuführeinrichtungen 45 gekoppelt sein, die durch den Materialspender 3 mit der Trommel 4 mit darauf aufgewickeltem Borstenmaterial 5, die Führungsrollen 6, 7, die Schneidevorrichtung 8 mit der Schneiderolle 9 und der Gegenrolle 10 und die Borstenführung 14 gebildet ist. Dann kann die Steuerung 44 Informationen über die zugeführte Menge von Borsten 12 bereits von den Borstenzuführeinrichtungen 45 erhalten, daraus die Füllmenge in dem Borstenaufnahmeschacht 13 ermitteln und in Abhängigkeit davon die Verstellung des Borstenaufnahmeschachtes 13 steuern. Dadurch wird der Herstellungsprozeß der Bürstendichtungen 2 oder der Bürstendichtungssegmente 20 weitgehend automatisiert und kann rationell ablaufen.

Durch die Kopplung der Steuerung 44 mit den Borstenzuführeinrichtungen 45 kann erstere auch die Zuführung von Borsten 12 zum Borstenaufnahmeschacht 13 mengen- und ggf. artmäßig steuern. Insbesondere ist es somit dadurch möglich, verschiedenartige Borsten in einer vorgebbaren Weise in einer Bürstendichtung 2 zu kombinieren, was jedoch auch durch eine vorgegebene Zuführungsart alleine möglich ist.

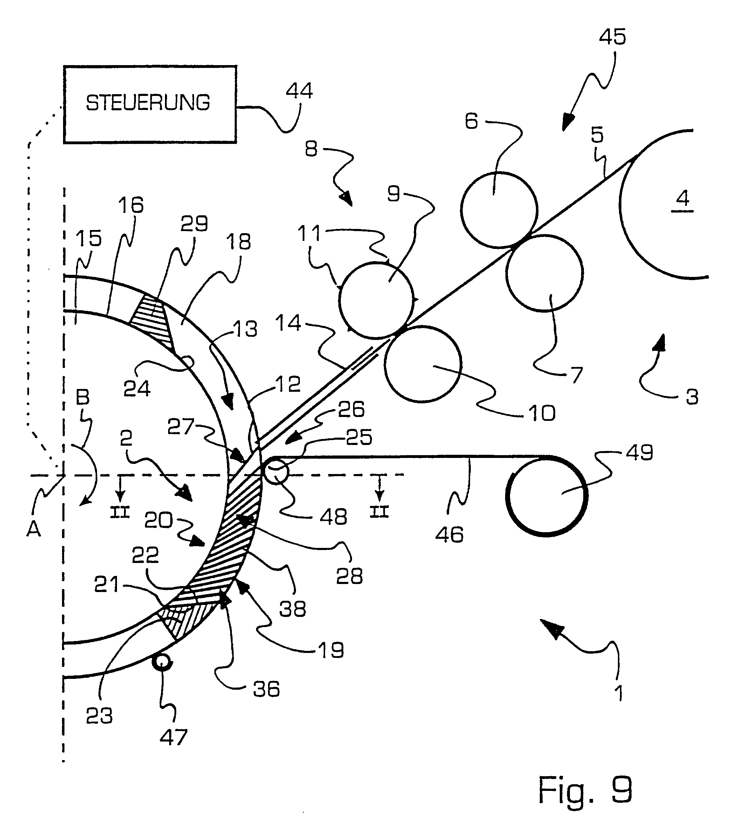

In der Fig. 9 ist eine weitere Ausführung der Vorrichtung zum Herstellen von Bürstendichtungen gezeigt. Diese Ausführung ist, wie der Vergleich zeigt, weitgehend identisch mit der in der Fig. 1 dargestellten Version. Unterschiedlich ist jedoch die Gestaltung der Abschluß-Schachtwand 19. Bei der Ausführung gemäß Fig. 9 ist die Abschluß-Schachtwand 19 nämlich nicht wie bei der Gestaltung nach Fig. 1 fest mit der Trommel 4 bzw. den Seitenringen 17, 18 verbunden, sondern besteht aus einem Band 46, das im Bereich des Schachtbodens 21 über eine Befestigung 47 an den Borstenaufnahmeschacht 13 angeschlossen ist. Während der Verstellbewegung des Borstenaufnahmeschachtes 13 synchron zum Einführen der Borsten 12 wird das Band 46, das z.B. ein Stahlband sein kann, über eine Umlenkrolle 48 von einer Zuführrolle 49 zugeführt. Die Zuführrolle 48 bestimmt somit die Einführstelle 26 für Borsten 12 beispielsweise von den Borstenzuführeinrichtungen 45.

Damit das Band 46 straff an den Borstenaufnahmeschacht 13 angelegt werden kann, kann die Zuführrolle 49 entgegen der Abzugsbewegung des Bandes 46 durch die Verstellung des Borstenaufnahmeschachtes 13 z.B. mit einer Torsionsfeder (nicht gezeigt) beaufschlagt werden, die eine entsprechende Rückhaltekraft bereitstellt. Ferner kann die Umlenkrolle 48 gleichzeitig als Anpreßrolle fungieren, um so die optimale Positionierung des Bandes 46 über dem Borstenaufnahmeschacht 13 zu gewährleisten.

Die Ausgestaltung der Abschluß-Schachtwand 19 als Band 46 stellt sicher, daß es zu keiner Relativbewegung zwischen der Abschluß-Schachtwand 19 und den in den Borstenaufnahmeschacht 13 gestapelten Borsten 12 kommt, so daß diese ihre eingeschlichtete Lage stabil beibehalten. Die Ausführung der Abschluß-Schachtwand 19 als ein oder mit einem Band 46 ist besonders bei größeren Bürstendichtungssegmenten 20 vorteilhaft.

Das Band 46 kann nach dem Einstapeln der Borsten 12 vor deren Weiterverarbeitung zur Bürstendichtung 2 leicht entfernt werden, indem die Befestigung 47 gelöst wird. Wenn eine o.g. Torsionsfeder o.ä. vorhanden ist, bewirkt diese dann das Aufwickeln des Bandes 46 auf die Zuführrolle 49. Alternativ kann das Band 46 aber auch als Verbrauchsmaterial an dem Borstenaufnahmeschacht 13 verbleiben und beispielsweise den Rücken der herzustellenden Bürstendichtung 2 bilden. Das Band 46 ist ferner nicht auf Stahlbänder o.ä. beschränkt. Es kann auch ein beschichtetes oder unbeschichtetes Kunststoffband sein, das aus Stabilitätsgründen ggf. über ein stabileres Band oder eine Gliederkette abgestützt ist. Ferner kann das Band so geformt sein, daß es eine oder zwei Bürstenwangen 30 enthält, die dann gleichzeitig mit der Zuführung des Bandes 46 in den Borstenaufnahmeschacht 13 eingeführt werden.

Dazu wird mit der Schneidevorrichtung 8 das von dem Materialspender 3 abgezogene Borstenmaterial 5 in Borsten vorgegebener Länge geschnitten. Vorher oder nachher kann ggf. eine Oberflächenbehandlung der Borsten 12 durchgeführt werden. Die somit erhaltenen Borsten 12 werden in den Borstenaufnahmeschacht 13 gestapelt, der von der Steuerung 44 in Abhängigkeit von seinem Füllzustand mit Borsten 12 so verstellt wird, daß die Oberfläche des Borstenstapels 28 während der Zuführung der Borsten 12 immer eine zumindest annähernd konstante Lage beibehält, die insbesondere der Einführstelle 26 an der ortsfesten oder stationären Abschluß-Schachtwand 19 entspricht. Durch diese Steuerung wird sichergestellt, daß die zugeführten Borsten 12 immer an der Einführstelle 26 in einer definierten Weise in den Borstenaufnahmeschacht 13 ggf. auf der Oberfläche 27 eines bereits begonnenen Borstenstapels 28 abgelegt werden. Dadurch wird weiterhin sichergestellt, daß die Borsten 12 in einer exakten Lage und Ausrichtung gestapelt werden, in der sie letztlich in der Bürstendichtung 2 zur Verfügung stehen sollen..

Während des Füllvorgangs des Borstenaufnahmeschachtes 13 wird somit, wenn dieser Vorgang kontinuierlich abläuft, die Trägerscheibe 16 in gleicher Weise oder synchron in Abhängigkeit von der Füllhöhe in dem Borstenaufnahmeschacht 13 kontinuierlich gedreht. Dagegen bleibt die Abschluß-Schachtwand 19 ortsfest oder stationär, wie auch die Borstenzuführeinrichtungen 45.

Mit der Schneidevorrichtung 8 können die Borsten 12 von dem Borstenmaterial 5 exakt auf eine erforderliche Länge abgeschnitten werden. Die Borsten 12 können dann, nachdem sie über die Borstenführung 14 in den Borstenaufnahmeschacht 13 eingeführt wurden, darin in jeglicher gewünschten Lage gestapelt werden, die durch die Lageoberfläche 22 des ersten Segmentabschlusses 23 vorgebbar ist. Die Borsten 12 können daher z.B. so eingelagert werden, daß sie schräg zum Querschnitt des Borstenaufnahmeschachtes 13 verlaufen, um einem späteren Einsatz der Bürstendichtung 2 an einer in eine Richtung laufenden Drehwelle Rechnung zu tragen. Die Querschnittsform des Borstenaufnahmeschachtes 13 selbst kann ebenfalls in Abhängigkeit vom späteren Einsatzort der Bürstendichtung 2 festgelegt werden.

Die Lage, Ausrichtung und Stapelhöhe der Borsten 12 in dem Borstenaufnahme-schacht 13 wird somit durch die Segmentabschlüsse 23, 29 bestimmt, die auch der Festlegung der Borsten 12 in dem Borstenaufnahmeschacht 13 dienen, nachdem ggf. die Abschluß-Schachtwand 19 abgenommen wurde. Ist eine vorgesehene Segmentgröße eines herzustellenden Bürstendichtungssegmentes 20 erreicht, wird ggf. der zweite Segmentabschluß 29 an das Borstenpaket oder den Borstenstapel 28 geführt. Die Abschluß-Schachtwand 19 kann nun entfernt werden. Der Bürstenrücken 41 mit dem Verbindungsbereich 36 ist dann frei zugänglich.

Durch Befestigungsmittel 34 werden dann die Borsten 12 untereinander und mit den Bürstenwangen 30 verbunden, die vorher in den Borstenaufnahmeschacht 13 eingesetzt wurden oder alternativ darin ausgebildet wurden, was vor, während oder nach dem Einschlichten der Borsten 12 erfolgen kann. Abschließend kann die Bürstenwange 30 oder können die Bürstenwangen 30 zusammen mit den daran befestigten Borsten 12 aus dem Borstenaufnahmeschacht 13 entnommen werden. Um dies zu erleichtern, können die Seitenringe 17, 18 ganz oder teilweise von der Trägerscheibe 16 abnehmbar sein. Wenn mit dem soweit beschriebenen Verfahren nur Bürstendichtungssegmente 20 hergestellt wurden, müssen diese nur noch zu einer vollständigen Bürstendichtung 2 kombiniert, d.h. aneinander befestigt werden.

## Patentansprüche

1. Verfahren zur Herstellung von Bürstendichtungen (2) mit folgenden Schritten
- Stapeln von Borsten (12) in einen Borstenaufnahmeschacht (13) derart, daß die Borsten (12) teilweise neben dem Platz für zumindest eine Bürstenwange (30) liegen,
- Verstellen des Borstenaufnahmeschachtes (13) in Synchronisation mit dem Stapeln der Borsten (12) relativ zu einer Einführstelle (26) der Borsten (12) in den Borstenaufnahmeschacht (13), so daß die Lage einer Borstenstapeloberfläche (27) in dem Borstenaufnahmeschacht (13) relativ zur Einführstelle (26) zumindest im wesentlichen konstant bleibt,
- Befestigen der Borsten (12) an zumindest einer Bürstenwange (30) in dem Borstenaufnahmeschacht (13), und
- Entnehmen der zumindest einen Bürstenwange (30) mit den daran befestigten Borsten (12) aus dem Borstenaufnahmeschacht (13).

2. Herstellungsverfahren für Bürstendichtungen nach Anspruch 1, **dadurch gekennzeichnet, daß** in den Borstenaufnahmeschacht (13) zwei Bürstenwangen (30) eingesetzt und die Borsten (12) in dem Borstenaufnahmeschacht (13) so gestapelt werden, daß die Borsten (12) teilweise zwischen den beiden Bürstenwangen (30) liegen.

3. Herstellungsverfahren für Bürstendichtungen nach einem der vorhergehenden Ansprüche, **dadurch gekennzeichnet, daß** die Borsten (12) in ihrem neben der zumindest einen Bürstenwange (30) liegenden Bereich durch Verwendung beispielsweise eines Lasers, Plasmabrenners o.ä. verschmolzen werden.

4. Herstellungsverfahren für Bürstendichtungen nach einem der vorhergehenden Ansprüche, **dadurch gekennzeichnet, daß** die Borsten (12) vor dem Einführen in den Borstenaufnahmeschacht (13) zum Stapeln darin in ihrem neben der zumindest einen Bürstenwange (30) zu liegen kommenden Bereich einer Oberflächenbehandlung unterzogen werden, die das Befestigen der Borsten (12) an der zumindest einen Bürstenwange (30) begünstigt.

5. Herstellungsverfahren für Bürstendichtungen nach einem der vorhergehenden Ansprüche, **dadurch gekennzeichnet, daß** die Borsten (12) in einem ihrer Endbereiche (38) oder in einem Zwischenbereich an der zumindest einen Bürstenwange (30) befestigt werden.

6. Herstellungsverfahren für Bürstendichtungen nach einem der vorhergehenden Ansprüche, **dadurch gekennzeichnet, daß** vor dem Einführen von Borsten (12) in den Borstenaufhahmeschacht (13) in letzteren ein erstes Segmentabschlußteil (23) eingesetzt wird, daß vor dem Befestigen der Borsten (12) an der zumindest einen Bürstenwange (30) ein zweites Segmentabschlußteil (29) in den Borstenaufnahmeschacht (13) eingesetzt wird, und daß die ersten und zweiten Segmentabschlußteile (23, 29) vor dem Kombinieren einzelner Bürstendichtungssegmente (20) zu einer vollständigen Bürstendichtung (2) entfernt werden.

7. Vorrichtung zum Herstellen von Bürstendichtungen, mit einer Halterung zur Ausbildung von einer Bürstenwange mit daran zu Bildung einer Bürstendichtung befestigten Borsten, **dadurch gekennzeichnet, daß** die Halterung durch einen Borstenaufnahmeschacht (13) gebildet ist, der in seinem Schachtverlauf zumindest eine Ausnehmung (31) für eine Bürstenwange (30) aufweist, so daß in dem Borstenaufnahmeschacht (13) gestapelte Borsten (12) teilweise neben der zumindest einen Bürstenwange (30) liegen können, und der relativ zu einer Einführstelle (26) der Borsten (12) in den Borstenaufnahmeschacht (13) verstellbar ist, so daß die Lage einer Borstenstapeloberfläche (27) in dem Borstenaufnahmeschacht (13) bei dessen Verstellung relativ zur Einführstelle (26) zumindest im wesentlichen konstant beibehaltbar ist.

8. Vorrichtung zum Herstellen von Bürstendichtungen nach Anspruch 7, **dadurch gekennzeichnet, daß** der Borstenaufnahmeschacht (13) eine die Einführstelle (26) der Borsten (12) bestimmende Abschluß-Schachtwand (19) enthält, die bei der Verstellung des Borstenaufnahmeschachtes (13) zur Bestimmung eines Schachteingangs stationär gehalten ist.

9. Vorrichtung zum Herstellen von Bürstendichtungen nach Anspruch 7, **dadurch gekennzeichnet, daß** eine die Einführstelle (26) der Borsten (12) in den Borstenaufnahmeschacht (13) bestimmende Umlenkrolle (48) gegenüber dem Borstenaufnahmeschacht (13) zur Bestimmung eines Schachteingangs stationär gehalten wird, und daß ein synchron mit der Verstellung des Borstenaufnahmeschachtes (13) über die Umlenkrolle (48) zuführbares Band (46) vorgesehen ist, das im Bereich eines Schachtbodes (21) des Borstenaufnahmeschachtes (13) an letzterem anbringbar ist, webei das Band (46) im Bereich des Borstenaufnahmeschachtes (13) zumindest Bestandteil einer Abschluß-Schachtwand (19) ist.

10. Vorrichtung zum Herstellen von Bürstendichtungen nach einem der Ansprüche 7 bis 9, **dadurch gekennzeichnet, daß** der Borstenaufnahmeschacht (13) eine entfernbare Abschluß-Schachtwand (19) enthält, so daß ein Verbindungsbereich (36) der Borsten (12) mit der zumindest einen Bürstenwange (30) in dem Borstenaufnahmeschacht (13) freigebbar ist.

11. Vorrichtung zum Herstellen von Bürstendichtungen nach einem der Ansprüche 7 bis 10, **dadurch gekennzeichnet, daß** der Borstenaufnahmeschacht (13) eine Ringnut oder einen Ringnutabschnitt, die bzw. der um das Ringzentrum (Mittelpunkt A) verstellbar ist, und eine die Ringnut oder den Ringnutabschnitt abdeckende Abschluß-Schachtwand (19) enthält, die insbesondere entfernbar und bei der Verstellung des Borstenaufnahmeschachtes (13) gegenüber einer Einführstelle (26) der Borsten (12) in den Borstenaufnahmeschacht (13) stationär

12. Vorrichtung zum Herstellen von Bürstendichtungen nach einem der Ansprüche 7 bis 11, **dadurch gekennzeichnet, daß** der Borstenaufnahmeschacht (13) im Querschnitt eine T-Form (33) aufweist, daß jeder der beiden Querausläufer (32) der T-Form (33) eine Ausnehmung (31) für eine Bürstenwange (30) bildet, und daß die Borsten (12) in dem Borstenaufnahmeschacht (13) mit einem ihrer Endbereiche (38) zwischen den beiden eingesetzten Bürstenwangen (30) stapelbar sind, wobei der obere Abschnitt der T-Form (33) durch eine Abschluß-Schachtwand (19) gebildet ist, die insbesondere entfernbar und bei der Verstellung des Borstenaufnahmeschachtes (13) gegenüber einer Einführstelle (26) der Borsten (12) in den Borstenaufnahmeschacht (13) stationär ist.

13. Vorrichtung zum Herstellen von Bürstendichtungen nach einem der Ansprüche 7 bis 11, **dadurch gekennzeichnet, daß** die zumindest eine Ausnehmung (31) für eine Bürstenwange (30) in dem Borstenaufnahmeschacht (13) von solcher Form und Größe ist, daß bei einer darin eingesetzten Bürstenwange 830) und in dem Borstenaufnahmeschacht (13) gestapelten Borsten (12) in einem Verbindungsbereich (36) der letzteren mit der zumindest einen Bürstenwange (30) ein Aufnahmeraum (37) für Befestigungsmittel (34) zum Befestigen der Borsten (12) an der zumindest einen Bürstenwange (30) gebildet ist.

14. Vorrichtung zum Herstellen von Bürstendichtungen nach einem der Ansprüche 7 bis 13, **dadurch gekennzeichnet, daß** Borstenzuführeinrichtungen (45) zum Einführen von Borsten (12) in den Borstenaufnahmeschacht (13) vorgesehen sind.

15. Vorrichtung zum Herstellen von Bürstendichtungen nach Anspruch 14, **dadurch gekennzeichnet, daß** die Borstenzuführeinrichtungen (45) zum Einführen von verschiedenen Borstenarten in den Borstenaufnahmeschacht (13) insbesondere für vorgebbare Anordnungen der verschiedenen Borstenarten in dem Borstenaufnahmeschacht (13) ausgelegt sind, und daß für die Borstenzuführeinrichtung (45) vorzugsweise eine einstellbare Steuerung (44) für die Anordnung der verschiedenen Borstenarten in dem Borstenaufnahmeschacht (13) vorgesehen ist.

16. Vorrichtung zum Herstellen von Bürstendichtungen nach einem der Ansprüche 7 bis 15, **dadurch gekennzeichnet, daß** der Boden (21) des Borstenaufnahmeschachtes (13) durch eine Lageoberfläche (22) eines ersten Segmentabschlußteils (23) gebildet ist, und daß die Lageoberfläche (22) die Lage und Ausrichtung der gestapelten Borsten (12) relativ zu der zumindest einen Bürstenwange (30) bestimmt.

17. Vorrichtung zum Herstellen von Bürstendichtungen nach einem der Ansprüche 7 bis 16, **dadurch gekennzeichnet, daß** eine Steuerung (44) vorgesehen ist, die zum Synchronisieren der Verstellung des Borstenaufnahmeschachtes (13) mit dessen Füllgrad mit Borsten (12) ausgelegt ist.

18. Vorrichtung zum Herstellen von Bürstendichtungen nach Anspruch 17, **dadurch gekennzeichnet, daß** die Steuerung (44) zum Feststellen des Füllgrades des Borstenaufnahmeschachtes (13) mit Borsten (12) anhand der Borstenzuführung in den Borstenaufnahmeschacht (13) ausgelegt ist, und daß die Steuerung (44) insbesondere zum Synchronisieren der Borstenzuführeinrichtungen (45) mit der Verstellung des Borstenaufnahmeschachtes (13) ausgelegt ist.

## Claims

1. Method for the production of brush seals (2), which comprises the following steps:
- bristles (12) are stacked in a bristle-holder shell (13) in such manner that the bristles (12) rest in part against the position for at least one side-piece (30) of the brush,
- the bristle-holder shell (13) is moved in synchronisation with the stacking of the bristles (12) relative to an entry point (26) of the bristles (12) into the bristle-holder shell (13), so that the position of a bristle stack surface (27) in the bristle-holder shell (13) remains at least substantially constant relative to the point of entry (26),
- the bristles (12) are attached to at least one side-piece (30) of the brush in the bristle-holder shell (13), and
- the at least one brush side-piece (30) with the bristles (12) attached thereto is removed from the bristle-holder shell (13).

2. Production method for brush seals according to Claim 1,
**characterised in that**
two brush side-pieces (30) are inserted in the brush-holder shell (13) and the bristles (12) are stacked in the brush-holder shell (13) in such manner that the bristles (12) lie in part between the two brush side-pieces (30).

3. Production method for brush seals according to either of the preceding claims,
**characterised in that**
in the area thereof resting against at least one brush side-piece (30), the bristles (12) are melted by the use, for example, of a laser, a plasma torch, or suchlike.

4. Production method for brush seals according to any of the preceding claims,
**characterised in that**
before they are introduced into the brush-holder shell (13) for stacking therein, the bristles (12) are subjected to a surface treatment on that part which will rest against at least one brush side-piece (30), the said treatment favouring the attachment of the bristles (12) to the at least one brush side-piece (30).

5. Production method for brush seals according to any of the preceding claims,
**characterised in that**
the bristles (12) are attached to the at least one brush side-piece (30) at one of their end areas (38) or at an intermediate area.

6. Production method for brush seals according to any of the preceding claims,
**characterised in that**
before the bristles (12) are introduced into the bristle-holder shell (13), a first segment-delimiting element (23) is inserted in the latter, before the bristles (12) are attached to the at least one brush side-piece (30) a second segment-delimiting element (29) is inserted in the brush-holder shell (13), and the first and second segment-delimiting elements (23, 29) are removed before individual brush seal segments (20) are combined into a complete brush seal (2).

7. Device for the production of brush seals, with a holder for the formation of a brush side-piece with bristles attached thereto in order to form a brush seal,
**characterised in that**
the holder is formed by a bristle-holder shell (13), along the course of which there is at least one recess (31) for a brush side-piece (30), so that bristles (12) stacked within the bristle-holder shell (13) can rest in part against the at least one brush side-piece (30), and which can be moved relative to an entry point (26) of the bristles (12) into the bristle-holder shell (13), in such manner that the position of a bristle stack surface (27) in the bristle-holder shell (13) can be kept at least substantially constant during its movement relative to the said entry point (26).

8. Device for the production of brush seals according to Claim 7,
**characterised in that**
the bristle-holder shell (13) comprises a delimiting shell wall (19) that determines the entry point (26) of the bristles (12), the said wall being held stationary during the movement of the bristle-holder shell (13) in order to determine a shell inlet.

9. Device for the production of brush seals according to Claim 7,
**characterised in that**
a deflection roller (48) that determines the entry point (26) of the bristles (12) into the bristle-holder shell (13) is held stationary in order to determine a shell inlet, and a strip (46) that can be fed in over the deflection roller (48) synchronously with the movement of the bristle-holder shell (13) is provided, which can be brought against the bristle-holder shell (13) in the area of a shell bottom (21) thereof, such that in the area of the bristle-holder shell (13) the strip (46) is at least part of a delimiting shell wall (19).

10. Device for the production of brush seals according to any of Claims 7 to 9,
**characterised in that**
the bristle-holder shell (13) comprises a removable delimiting shell wall (19), so that an attachment zone (36) of the bristles (12) to the at least one brush side-piece (30) in the bristle-holder shell (13) can be exposed.

11. Device for the production of brush seals according to any of Claims 7 to 10,
**characterised in that**
the bristle-holder shell (13) comprises an annular groove or annular groove section which can be moved around the centre of the annulus (mid-point A), and also comprises a delimiting shell wall (19) that covers the annular groove or annular groove section, which can in particular be removed and is held stationary relative to an entry point (26) of the bristles (12) into the bristle-holder shell (13) during the movement of the latter.

12. Device for the production of brush seals according to any of Claims 7 to 11,
**characterised in that**
the cross-section of the bristle-holder shell (13) is T-shaped (33), each of the two transverse arms (32) of the T-shape (33) forming a recess (31) for a brush side-piece (30), and the bristles (12) can be stacked in the bristle-holder shell (13) with one of their end areas (38) between the two inserted brush side-pieces (30), such that the upper section of the T-shape (33) is formed by a delimiting shell wall (19), the latter in particular being removable and being stationary relative to an entry point (26) of the bristles (12) into the bristle-holder shell (13) during the movement of the latter.

13. Device for the production of brush seals according to any of Claims 7 to 11,
**characterised in that**
the at least one recess (31) for a brush side-piece (30) in the bristle-holder shell (13) is of such shape and size, that when a brush side-piece (30) is inserted therein and bristles (12) are stacked in the bristle-holder shell (13), in an attachment area (36) of the said bristles to the at least one brush side-piece (30) a space (37) is available to accommodate a fixative (34) for attaching the bristles (12) to the at least one brush side-piece (30).

14. Device for the production of brush seals according to any of Claims 7 to 13,
**characterised in that**
bristle feed mechanisms (45) are provided in order to feed bristles (12) into the bristle-holder shell (13).

15. Device for the production of brush seals according to Claim 14,
**characterised in that**
the bristle feed mechanisms (45) are designed to enable various types of bristles to be fed into the bristle-holder shell (13), in particular with predeterminable arrangements of the various bristle types in the bristle-holder shell (13), and that a preferably adjustable control unit (44) is provided for the bristle feed mechanism (45) to enable the various bristle types to be arranged in the bristle-holder shell (13).

16. Device for the production of brush seals according to any of Claims 7 to 15,
**characterised in that**
the bottom (21) of the bristle-holder shell (13) is formed by a positioning surface (22) of a first segment-delimiting element (23), and the said positioning surface (22) determines the positioning and direction of the stacked bristles (12) relative to the at least one brush side-piece (30).

17. Device for the production of brush seals according to any of Claims 7 to 16,
**characterised in that**
a control unit (44) is provided, which is designed so as to synchronise the movement of the bristle-holder shell (13) with the level to which it is full of bristles (12).

18. Device for the production of brush seals according to Claim 17,
**characterised in that**
the control unit (44) is designed to detect the fullness level of the bristle-holder shell (13) with bristles (12) by taking account of the feeding of bristles into the bristle-holder shell (13), and the control unit (44) is designed in particular to synchronise the bristle feed mechanisms (45) with the movement of the bristle-holder shell (13).

## Revendications

1. Procédé pour fabriquer des dispositifs d'étanchéité en forme de balai (2) comprenant les étapes suivantes consistant à :
- empiler des poils (12) dans un conduit (13) de réception de poils de telle sorte que les poils (12) sont disposés en partie à côté de l'emplacement pour au moins un cadre (30) de balai,
- déplacer le conduit (13) de réception de poils en synchronisme avec l'empilage des poils (12) par rapport à un point (26) d'introduction des poils (12) dans le conduit (13) de réception des poils de sorte que la position d'une surface (27) d'empilage des poils par rapport au point d'introduction (26) reste au moins sensiblement constante,
- fixer les poils (12) sur au moins un cadre de balai (30) dans le conduit (13) de réception des poils, et
- retirer au moins un cadre de balai (30) avec les poils (12), qui y sont fixés, hors du conduit (13) de réception des poils.

2. Procédé de fabrication de dispositifs d'étanchéité en forme de balai selon la revendication 1, **caractérisé en ce que** dans le conduit (13) de réception des poils on insère deux cadres de balai (30) et on empile les poils (12) dans le conduit (13) de réception des poils de manière que les poils (12) soient situés partiellement entre les deux cadres de balai (30).

3. Procédé de fabrication de dispositifs d'étanchéité en forme de balais selon l'une des revendications précédentes, **caractérisé en ce qu'**on ramollit les poils (12) dans leur partie située à côté d'au moins un cadre de balai (30), en utilisant par exemple un laser, un brûleur à plasma ou analogue.

4. Procédé de fabrication de dispositifs d'étanchéité en forme de balai selon l'une des revendications précédentes, **caractérisé en ce qu'**avant leur introduction dans le conduit (13) de réception des poils, pour leur empilage dans ce dernier, on soumet les poils (12), dans leur partie qui vient s'appliquer à côté d'au moins un cadre de balai (30), à un traitement de surface qui favorise la fixation des poils (12) sur le au moins un cadre de balai (30).

5. Procédé de fabrication de dispositifs d'étanchéité en forme de balai selon l'une des revendications précédentes, **caractérisé en ce qu'**on fixe les poils (12), dans une de leurs parties d'extrémité (38) ou dans une partie intermédiaire, au au moins un cadre de balai (30).

6. Procédé de fabrication de dispositifs d'étanchéité en forme de balai selon l'une des revendications précédentes, **caractérisé en ce qu'**avant l'introduction de poils (12) dans le conduit (13) de réception des poils, on insère, dans ce conduit, une première partie terminale de segment (23), qu'avant la fixation des poils (12) on insère, sur le au moins un cadre de balai (30), une seconde partie de terminaison de segment (29) dans le conduit (13) de réception des poils et que l'on retire les première et seconde parties de terminaison de segment (23,29) avant la combinaison de segments individuels (20) du dispositif d'étanchéité en forme de balai pour former un dispositif d'étanchéité en forme de balai complet (2).

7. Dispositif pour fabriquer des dispositifs d'étanchéité en forme de balais, comportant un dispositif de retenue pour former un cadre de balai sur lequel des poils sont fixés pour former un dispositif d'étanchéité en forme de balai, **caractérisé en ce que** le dispositif de retenue est formé par un conduit (13) de réception des poils, qui comporte, sur son étendue, au moins un évidement (31) pour un cadre de balai (30), de sorte que des poils (12) empilés dans le conduit (13) de réception de poils peuvent s'appliquer en partie à côté du au moins un cadre de balai (30) et qui est déplaçable par rapport à un point (26) d'introduction des poils (12) dans le conduit (13) de réception des poils de sorte que la position d'une surface (27) de la pile de poils dans le conduit (13) de réception des poils peut être maintenue au moins sensiblement constante lors du déplacement de ce conduit par rapport au point d'introduction (26).

8. Dispositif pour fabriquer des dispositifs d'étanchéité en forme de balai selon la revendication 7, **caractérisé en ce que** le conduit (13) de réception des poils contient une paroi de terminaison (19), qui détermine le point d'introduction (26) des poils (12) et qui est maintenu fixe lors du déplacement du conduit (13) de réception des poils, pour la détermination d'une entrée du conduit.

9. Dispositif pour fabriquer des dispositifs d'étanchéité en forme de balai selon la revendication 7, **caractérisé en ce qu'**un rouleau de renvoi (48), qui détermine le point d'introduction (26) des poils (12) dans le conduit (13) de réception des poils est retenu de façon fixe par rapport au conduit (13) de réception des poils pour déterminer une entrée dans le conduit, et qu'il est prévu une bande (46), qui peut être amenée en synchronisme avec le déplacement du conduit (13) de réception des poils par l'intermédiaire du rouleau de renvoi (48) et qui peut être appliquée contre le conduit (13) de réception des poils dans la zone d'un fond (21) de ce conduit, la bande (46) faisant au moins partie d'une paroi de terminaison de conduit (19), dans la zone du conduit (13) de réception des poils.

10. Dispositif pour fabriquer des dispositifs d'étanchéité en forme de balai selon l'une des revendications 7 à 9, **caractérisé en ce que** le conduit (13) de réception des poils contient une paroi de terminaison (19) qui peut être retirée, de sorte qu'une zone de liaison (36) des poils (12) à au moins un cadre de balai (30) peut être libéré dans le conduit (13) de réception des poils.

11. Dispositif pour fabriquer des dispositifs d'étanchéité en forme de balai selon l'une des revendications 7 à 10, **caractérisé en ce que** le conduit (13) de réception des poils contient une gorge en anneau ou une section de gorge en anneau, qui est déplaçable autour du centre de l'anneau (point central A), et une paroi de terminaison de conduit (19), qui recouvre la gorge en anneau ou la section de gorge en anneau et qui notamment peut être retirée et, dans le cas du déplacement du conduit (13) de réception des poils, est fixe par rapport à un point d'entrée (26) des poils (12) dans le conduit (13) de réception des poils.

12. Dispositif pour fabriquer des dispositifs d'étanchéité en forme de balai selon l'une des revendications 7 à 11, **caractérisé en ce que** le conduit (13) de réception des poils possède une forme en T (33) en coupe transversale, que chacun des deux éléments transversaux (32) de la forme en T (33) forme un évidement (31) pour un cadre de balai (30) et que les poils (12) peuvent être empilés dans le conduit (13) de réception des poils par une de leurs parties d'extrémité (38), entre les deux cadres de balai insérés (30), la partie supérieure de la forme en T (33) étant formée par une paroi d'extrémité de conduit (19), qui notamment peut être retirée et, lors du déplacement du conduit (13) de réception des poils par rapport à un point (26) d'introduction des poils (12), est fixe dans le conduit (13) de réception des poils.

13. Dispositif pour fabriquer des dispositifs d'étanchéité en forme de balai selon l'une des revendications 7 à 11, **caractérisé en ce que** le au moins un évidement (31) pour le cadre de balai (30) dans le conduit (13) de réception des poils possède une forme et une taille telles que, dans le cas où un support de balai (30) est inséré dans l'évidement et dans le cas où des poils (12) sont empilés dans le conduit (13) de réception des poils, un espace de logement (37) pour des moyens de fixation (34) servant à fixer les poils (12) au au moins un cadre de balai (30) est formé dans une zone de liaison (36) des poils avec le au moins un cadre de balai (30).

14. Dispositif pour fabriquer des dispositifs d'étanchéité en forme de balai selon l'une des revendications 7 à 13, **caractérisé en ce que** des dispositifs (45) d'amenée des poils sont prévus pour introduire des poils (12) dans le conduit (13) de réception des poils.

15. Dispositif pour fabriquer des dispositifs d'étanchéité en forme de balai selon la revendication 14, **caractérisé en ce que** les dispositifs (45) d'amenée des poils sont conçus pour introduire différents types de poils dans le conduit (13) de réception des poils, notamment pour des dispositions pouvant être prédéterminées des différents types de poils dans le conduit (13) de réception des poils, et que pour le dispositif (45) d'amenée des poils, il est prévu de préférence une unité de commande réglable (44) pour la disposition des différents types de poils dans le conduit (13) de réception des poils.

16. Dispositif pour fabriquer des dispositifs d'étanchéité en forme de balai selon l'une des revendications 7 à 15, **caractérisé en ce que** le fond (21) du conduit (13) de réception des poils est formé par une surface de positionnement (22) d'une première partie de terminaison de segment (23) et que la surface de positionnement (22) détermine la position et l'orientation des poils empilés (12) par rapport à au moins un cadre de balai (30).

17. Dispositif pour fabriquer des dispositifs d'étanchéité en forme de balai selon l'une des revendications 7 à 16, **caractérisé en ce qu'**il est prévu une unité de commande (47), qui est conçue pour la synchronisation du déplacement du conduit (13) de réception des poils avec son degré de remplissage avec des poils (12).

18. Dispositif pour fabriquer des dispositifs d'étanchéité en forme de balai selon la revendication 17, **caractérisé en ce que** l'unité de commande (44) est conçue pour fixer le degré de remplissage du conduit (13) de réception des poils avec des poils (12) sur la base de l'amenée des poils dans le conduit (13) de réception des poils et que l'unité de commande (44) est conçue notamment pour synchroniser les dispositifs (45) d'amenée des poils avec le déplacement du conduit (13) de réception des poils.
